# EUROPEAN PATENT SPECIFICATION

(11) **EP 2 244 000 B1**
(45) Date of publication and mention of the grant of the patent: **04.04.2012**
(21) Application number: 10382035.3
(22) Date of filing: 16.02.2010
(51) Int. Cl.: F21S 8/00, F21V 15/01, F21V 31/00, F21V 27/02, F21Y 101/02

(54) **Light signaling Marker**
Lichtsignalisierungswarner
Marqueur de signalisation de lumière

(30) Priority: 22.04.2009 ES 200930040 U
(43) Date of publication of application: 27.10.2010
(73) Proprietor: Daisalux, S.A., 01015 Vitoria-Gasteiz (Vitoria) (ES)
(72) Inventor: Fernandez de Arróyabe Santos, José, Antonio, 01015 Vitoria-Gasteiz (Vitoria) (ES)
(74) Representative: Carpintero Lopez, Francisco

(56) References cited:
- WO-A1-02/066888
- DE-U1- 29 808 430
- GB-A- 2 428 467
- US-A- 5 481 443

## Description

### Object of the Invention

As expressed in the title of the present specification, the invention relates to a light signaling marker.

More particularly, the object of the invention is centered on a marker of the type intended for being installed to indicate a determined situation and/or location, which is specifically of the light-type, which has the particularity that it allows focusing the light beam it emits directly or indirectly. Likewise, the light the marker radiates can advantageously be of different colors, reflected through a colored glass plate it has as a cover that can be interchanged. Furthermore, both said cover and the frame surrounding it can be of a circular or square configuration, whichever is most appropriate for each case.

### Field of Application of the Invention

The field of application of the present invention is comprised in the technical industrial sector which manufactures signaling markers, particularly light markers.

### Background of the Invention

It must be pointed out that today, and in reference to the state of the art, that even though there are many types of markers of the type described herein existing on the market, the applicant is unaware of the existence of any having technical, structural or configuration features similar to those of the one herein proposed. Document WO 02/066888 A1 discloses a light signaling marker according to the preamble of claim 1 of the invention.

### Description of the Invention

Specifically, the marker herein described is configured from a body which is housed inside a junction box, which is built into the locations to be indicated, lit and pointed out, a frame incorporating a translucent glass cover through which the light is radiated and which can be colored remaining outside at its front face.

This cover is advantageously interchangeable so as to allow modifying the color of the light radiations and to be able to use the most suitable colors in each case.

In turn, the frame can be circular or quadrangular, whichever is appropriate, being able to be adapted in both cases to the inner housing of the junction box built into and arranged in the area for installation.

When the frame is circular, the body of the marker, which is inside the frame, extends downwardly in a hollow prolongation of a cylindrical configuration and prolongations are internally provided, which prolongations create inner tapering by way of steps on which the base of the body of the marker is provided.

Said prolongations are traversed by a screw that is screwed in a nut housed between them, a catch that will move outwardly having been provided, which catch forms the securing means for fixing the frame and the body of the marker to the inside of its junction box.

Alternatively, as previously indicated, the frame can be of a quadrangular configuration. In such case, the base or body of the marker will have a quadrangular contour tightly fitting inside the configuration of this frame, extending downwardly, at its lower face, into a hollow prolongation of a cylindrical configuration, similar to that provided in the body with a circular frame.

In this case, a hoop or band is contemplated for fixing to the junction box, from the opposite planar parts of which hoop or band there outwardly emerge, in the outer area thereof, catches fitting in the inner part of projections provided in the center in the inner faces of the square frame.

Slotted holes have been made in these projections for housing and retaining screws that are screwed in threaded holes provided for such purpose inside two opposite walls of the junction box.

In both cases, the described frame and body assembly is finished with a back cover, which has a perimetric skirt fitting, inside the mentioned hollow prolongation of the body of the marker, until an outer step made in said skirt.

This perimetric skirt of the cover is closed, on the opposite side, with an elastic closure in which there has been provided a series of holes extending inwardly, in small extensions, the electrical conductors, which will feed the printed circuit of the marker, being intended to be tightly introduced like a seal.

Whether the frame is circular or square, the body of the marker has a different determined configuration, according to if the emission of said light beam is to be focused directly or indirectly, being adapted to facilitate the emission of the light beam from the light elements (diodes) arranged in a printed circuit board in one direction or another.

In the event that the light is to be projected indirectly, the body of the marker has a planar upper base forming a small incline on one side finished in a vertical window.

On the opposite face of the base or body a support ring is inserted in its hollow prolongation, from which ring there emerge terminals, as well as catches, between which there is retained another printed circuit board which contacts on one side, with said terminals and on the other, perpendicularly with the printed circuit containing the light-emitting diodes which are arranged such that they coincide with the opening of the vertical window.

The light beam is thus reflected on the inclined surface of the body of the marker and traverses the signaling glass cover, which is colored or not.

For the case in which the marker is to emit a light beam without reflection, i.e., directly outwards from the diodes through the translucent cover, the base of the body will be planar and its central area has a progressive recess, such that said central area is the area of maximum depression, equidistantly centered windows or square holes having been provided therein, through which windows or square holes the light beams radiated by the light-emitting diodes are emitted.

In order for the diodes to be located opposite said windows, the printed circuit containing said diodes must be positioned on the terminals, i.e., contacting with them, whereas the other printed circuit board is positioned parallel with respect to the printed circuit board of the diodes.

The described light signaling marker therefore represents an innovative structure having structural and constitutive features that were unknown until now for such purpose, which reasons, combined with its practical use, provide sufficient grounds for obtaining the exclusive right that is applied for.

### Description of the Drawings

To complement the description being made and for the purpose of aiding to better understand the features of the invention, a set of drawings is attached to this specification as an integral part thereof, in which the following has been depicted with an illustrative and non-limiting character:
Figure 1 shows a perspective view of the assembly of the marker object of the invention, in its version with the quadrangular frame.
Figure 2 shows a perspective view of the frame coupled to the junction box, also in the quadrangular version.
Figure 3 shows a longitudinal section view of the assembly of the marker according to the invention, in its quadrangular version and with indirect light radiation.

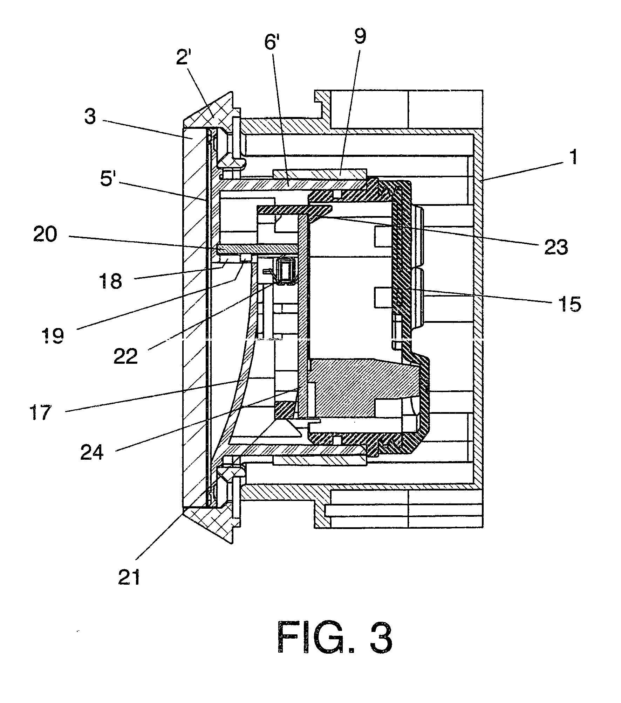

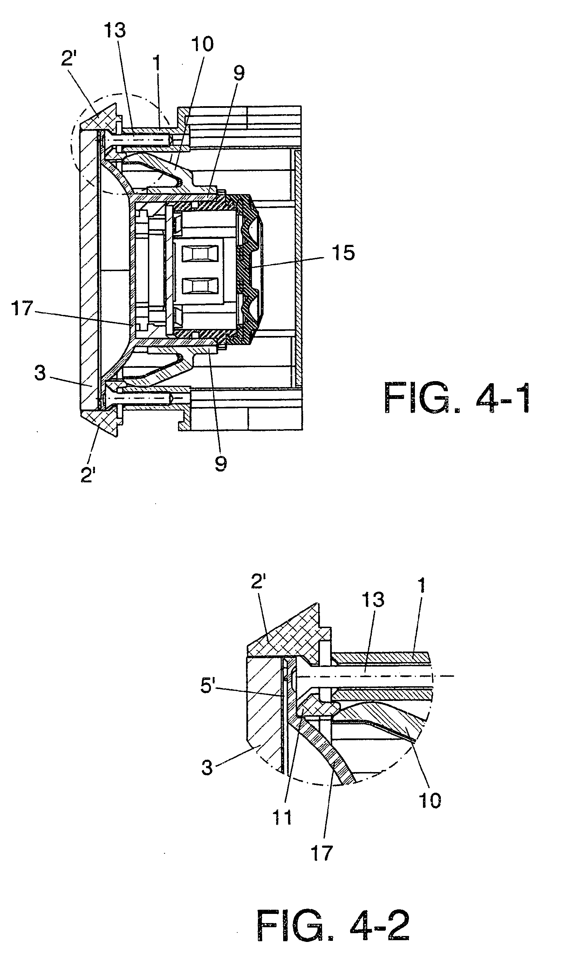

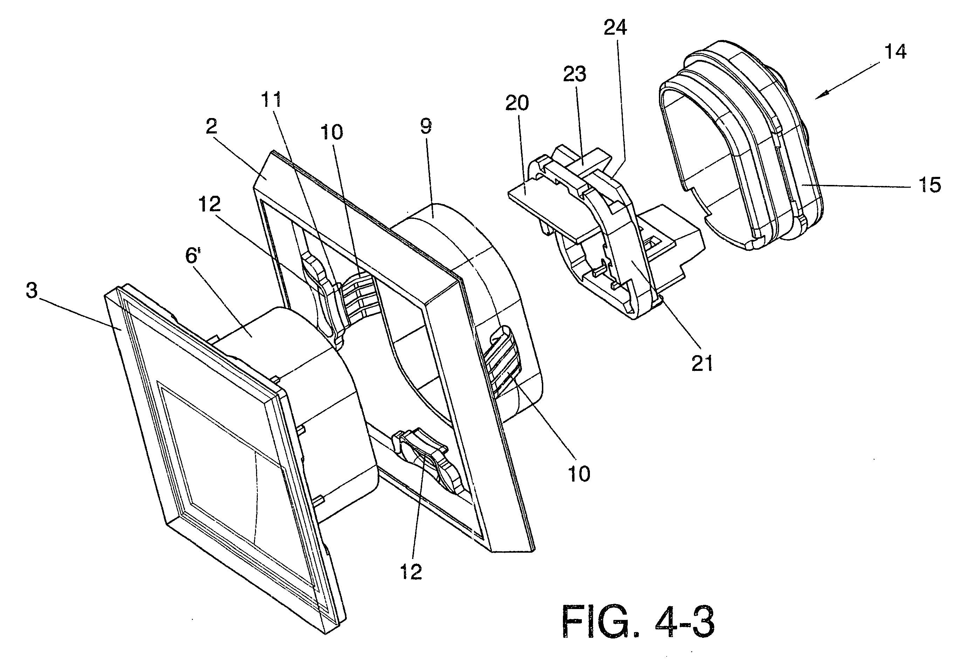

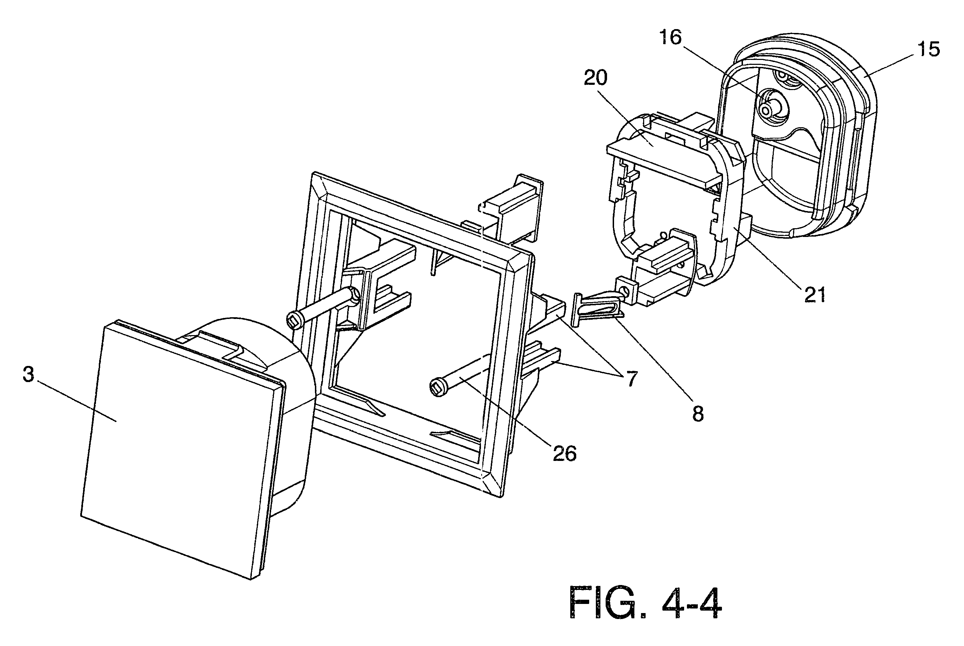

Figures 4-1, 4-2, 4-3 and 4-4 show a cross section view of the example of the marker shown in Figure 3 and an enlarged detail of the coupling between the quadrangular frame with the inner body and the ring it incorporates for said coupling. Figure 4-3 shows an exploded view of the assembly of the marker with the quadrangular frame having flanges arranged for locking the catches of a ring similar to the one shown in Figures 4-1 and 4-2. Figure 4-4 shows an exploded view of the marker with the quadrangular frame but with the securing system for the securing thereof to the junction box by means of catches that move outwardly.
Figure 5 shows a longitudinal section view of the marker in its quadrangular version but with direct light radiation, without reflection.

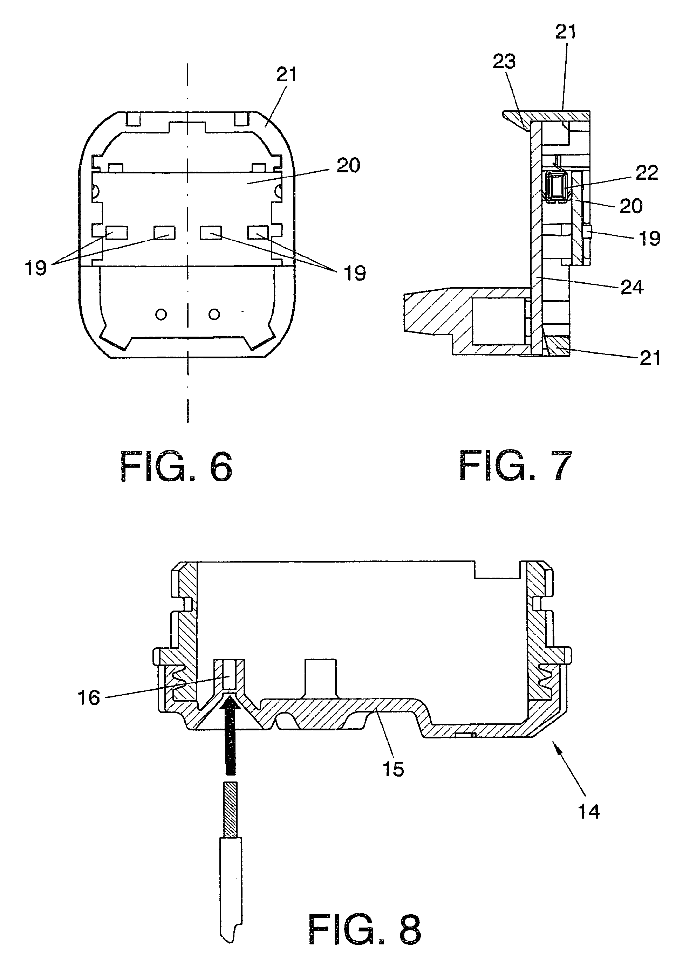

Figures 6 and 7 show respective plan and longitudinal section views of the support ring of the printed circuit boards of the marker.
Figure 8 shows a longitudinal section view of the back cover closing the inner body of the marker, the inlet holes for the connections being observed.
Figures 9 and 10 show respective perspective and disassembled views of the frame and the inner body of the marker in its circular version.

### Preferred Embodiment of the Invention

According to the mentioned drawings and according to the numbering used, a preferred embodiment of the invention can be seen therein, which preferred embodiment comprises the parts and elements which are indicated and described in detail below.

Therefore, as is observed in said drawings, the body (5, 5') of the marker will be housed inside a junction box (1) which is built into the locations to be indicated, lit and pointed out, a frame (2, 2') inside of which there is fitted a translucent glass cover (3), through which the light is radiated and which can be colored, remaining outside at its front face.

This cover (3) is interchangeable so as to allow modifying the color of the light radiations and to be able to use the most suitable colors in each case.

In turn, the frame can optionally be circular (2) or quadrangular (2'), whichever is appropriate, having the particularity of being adapted in both cases to the inner housing of the junction box (1) built into and arranged in the area for installation.

The translucent colored cover (3) is installed inside this frame (2, 2'), and the inner base or body (5, 5') of the marker is housed in its immediately lower plane.

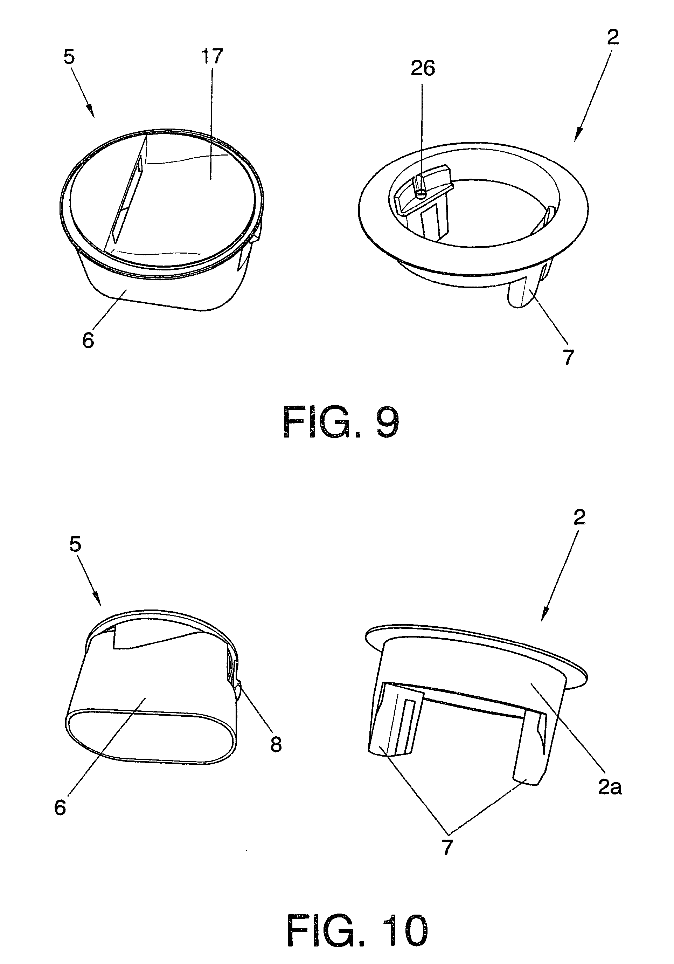

Therefore, when the frame is circular (2), as shown in Figures 9 and 10, the body (5), which has a circular contour adjusted to said frame (2), extends downwardly in a hollow prolongation (6) of a cylindrical configuration, and said circular frame (2) extends in a cylindrical form (2a) inside of which prolongations (7) are provided, which prolongations (7) create inner tapering by way of steps inside the mentioned circular frame (2), on which steps the base of the body (5) of the marker is supported.

The aforementioned prolongations (7) are traversed by a screw (26) the head of which is housed inside a circular flaring provided for such purpose and it is screwed in a nut housed between the two bodies of the prolongations (7). In turn, a catch (8) is provided in the body (5) which will move outwardly, forming the securing means for fixing the frame (2) and the body (5) to the inside of the junction box (1).

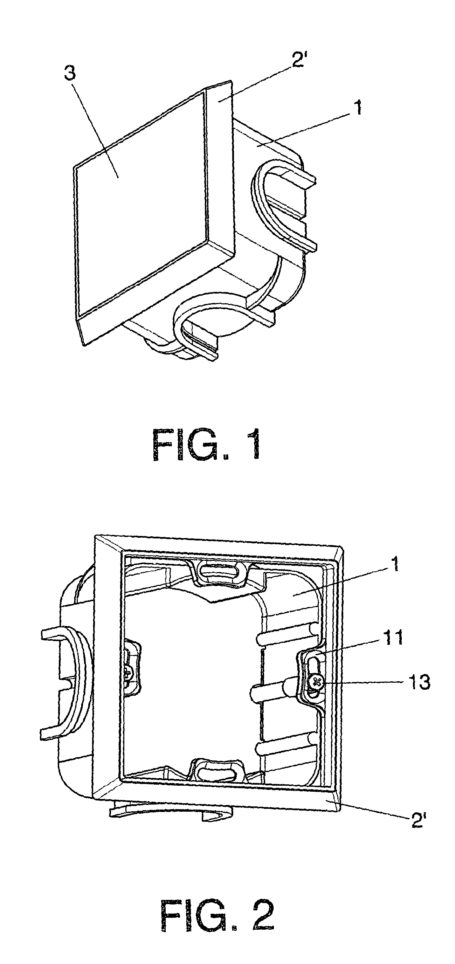

Alternatively, as previously indicated, the frame can be of a quadrangular configuration (2'), such as that shown in Figures 1 to 5.

In such case, like when it is circular, the base (5') of the body of the marker will have a contour such that it tightly fits inside the configuration of this frame (2'), in this case quadrangular, and extends downwardly, at its lower face, into a hollow prolongation (6') of a cylindrical configuration, with two planar opposite faces similar to the prolongation (6) provided in the body (5) with a circular frame (2).

A hoop or band (9) bracing said cylindrical prolongation (6') is contemplated, from opposite planar parts of which hoop or band (9) there outwardly emerge, in the outer area thereof, catches (10) fitting in the inner part of projections (11) provided in the center in the inner faces of the square frame (2). See Figures 3 and 4 (1, 2, 3).

Slotted holes (12) have been made in these projections (11), being able to have countersunk inner edges for housing and retaining screws (13) that are screwed in threaded holes provided for such purpose inside two opposite walls of the junction box (1).

The body (5') of the marker is thus secured to the frame (2') and the latter to the junction box (1).

It must be taken into account that this type of marker, with a translucent front cover (3) which is colored or not, can be housed in a quadrangular frame (2'), according to the drawing in Figure 4-4, in which, unlike that contemplated in Figure 4-3 already discussed, the assembly cover (3) is secured with the frame (2') by means of screws (26) traversing stepped tapering arranged in opposite sides of the frame (2') which are screwed in respective nuts housed between the prolongations of two parallel bodies (7) provided in the frame (2'). Respective catches (8) are provided between these two parallel bodies of the prolongations (7) such that as the screws (26) are screwed in the nuts, the catches (8) will move outwardly, locking in the inner faces of the junction box (1), this fixing means being conventional or known, and can also be used in this type of marker with a circular frame.

Both in the case of the circular frame (2) and in the case of the quadrangular frame (2'), the lower area or edge of the hollow cylindrical prolongation (6, 6') is finished with a back cover (14) which has a perimetric skirt fitting, inside the mentioned prolongation (6,6'), until an outer step made in said skirt.

This perimetric skirt of the cover (14) is closed on the opposite side with an elastic closure (15) in which there has been provided a series of holes (16) extending inwardly in small extensions, through which the electrical conductors which will feed the printed circuit of the marker can be tightly introduced like a seal.

Whether the frame is circular (2) or square (2'), the body (5') of the marker has a different determined configuration, being adapted to facilitate the emission of the light beam from the light elements (diodes) (19) arranged in a printed circuit board (20), according to if the emission of said light beam is to be emitted directly or indirectly.

In the event that the light is to be projected indirectly, the body (5') of the marker has a planar upper base forming a small incline (17) on one side finished in a vertical window (18) through which the light beam coming from the light-emitting source is emitted, which light-emitting source is formed by diodes (19) arranged in the electronic printed circuit board (20). As previously described, it extends downwardly on the opposite face of the base or body (5), forming the hollow cylindrical prolongation (6, 6').

A support ring (21) is inserted inside said prolongation (6, 6'), from which support ring (21) there emerge, inwardly and arranged in opposition, appendages (22) formed of metal with tabs like electrical contacts or terminals. Catches (23) are also provided in said support ring (21), which catches extend in the two corners of one side and in the center of the opposite side. Another printed circuit board (24) is retained between these catches (23) and the body itself of the support ring (21), which printed circuit board (24) contacts on one side with the terminals (22) and with the printed circuit board (20), which is arranged perpendicularly to it, as can be seen in Figure 3, such that the light-emitting diodes (19) are arranged such that they coincide with the opening of the vertical window (18).

The light beam is thus reflected on the inclined surface (17) of the body (5) of the marker and traverses the signaling glass cover (3), which is colored or not.

In the event that the marker is to emit a light beam without reflection, i.e., directly outwards from the diodes through the translucent cover, the base of the body (5) has a different configuration.

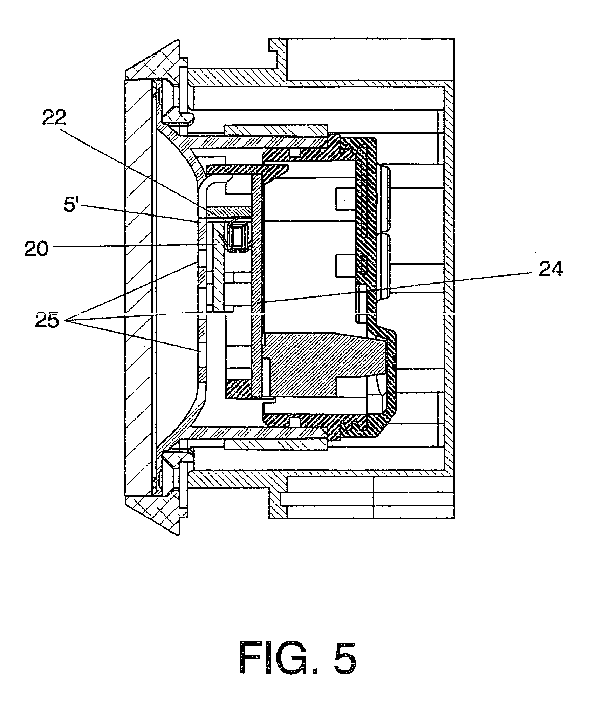

Therefore, for said case of direct light beam emission, the periphery of the base of the body (5) is planar, and a progressive recess has been made in its central area, such that said central area is the area of maximum depression, equidistantly centered windows or square holes (25) having been provided therein, through which windows or holes the light beams radiated by the light-emitting diodes (19) are emitted, as can be seen in Figure 5.

In order for the diodes (19) to be located opposite the windows or holes (25), the printed circuit (20) containing said diodes (19) must be positioned on the terminals (22), i.e., contacting with them, whereas the other printed circuit board (24) in this case is positioned parallel with respect to the printed circuit board (20), both boards (20) and (24) being in contact with the terminals (22).

Having sufficiently described the nature of the present invention as well as the manner of putting it into practice, a more extensive description is not considered necessary for a person skilled in the art to understand the scope thereof and the advantages derived therefrom, stating that within its essential nature, it could be carried out in other embodiments differing in detail from the one indicated by way of example, according to the scope of the appended claims.

## Claims

1. Light signaling marker, formed by a body (5) housed inside a junction box (1) which is built into the locations to be indicated, lit and pointed out, a frame (2,2'), inside of which there is fitted a translucent glass cover (3) through which the light is radiated and which can be colored, remaining outside at its front face, and the frame can be of a circular configuration (2) or quadrangular configuration (2'), whichever is appropriate, being adapted in both cases to the inner housing of the junction box (1), **characterized in that** the cover (3) is interchangeable, and that the body (5, 5') extends in the lower part into a hollow prolongation (6,6') of a circular configuration, with two planar opposite faces, the lower edge of which is finished with a back cover (14), which has a perimetric skirt fitting, inside the said prolongation (6,6'), until an outer step made in said skirt, which skirt, is closed, on the opposite side, with an elastic closure (15) in which there is provided a series of holes (16) extending inwardly in small extensions, through which the electrical conductors feeding a printed circuit board (20) containing the light-emitting elements can be tightly introduced like a seal.

2. Light signaling marker according to claim 1, **characterized in that** on the lower face of the base of the body (5, 5'), a support ring (21) with catches (23) is inserted in the prolongation (6, 6'), from which support ring (21) there emerge appendages (22), formed of metal with tabs like electrical contacts or terminals, which are in contact with the printed circuit board (20) containing the light elements formed by diodes (19), there being another printed circuit board (24) which is in contact with said terminals (22) and with said printed circuit board (20).

3. Light signaling marker according to claims 1 and 2, **characterized in that** when the frame is circular (2), the body (5) is circular and extends in a hollow circular prolongation (6), with two planar opposite faces, and said frame (2) has a circular contour (2a) in which prolongations (7) are provided, which prolongations (7) create inner tapering by way of steps inside the mentioned frame (2), on which steps the base of the body (5) of the marker is supported, which prolongations (7) are traversed by a screw (26) the head of which is housed inside a circular flaring and it is screwed in a nut, which makes a catch (8) forming the conventional securing means for the securing thereof to the inside of the junction box (1) move.

4. Light signaling marker according to claims 1 and 2, **characterized in that** when the frame is quadrangular (2'), the base (5') of the body of the marker has a quadrangular contour fitting tightly inside the configuration of this frame (2'), and extends downwardly, at its lower face, into a hollow prolongation (6') of a cylindrical configuration, with two planar opposite faces contemplating a hoop or band (9), from opposite planar parts of which hoop or band there outwardly emerge, in the outer area thereof, catches (10) fitting in the inner part of projections (11) provided in the center in the inner faces of the square frame (2), in which slotted holes (12) have been made, being able to have countersunk inner edges for housing and retaining screws (13) that are screwed in threaded holes provided for such purpose inside two opposite walls of the junction box (1).

5. Light signaling marker according to claims 1 to 4, **characterized in that** in order for the emitted light to be projected indirectly, the body (5) of the marker has a planar upper base forming a small incline (17) on one side finished in the opposite side with a vertical window (18) through which the light beam coming from the light-emitting source is emitted, formed by the diodes (19) arranged in the electronic printed circuit board (20).

6. Light signaling marker according to claim 5, **characterized in that** the printed circuit board (24) is retained between the catches (23) of the support ring (21) and the body of said support ring (21), contacting with the terminals (22) on one side and, perpendicularly with the printed circuit board (20) containing the light-emitting diodes (19) which are arranged such that they coincide with the opening of the vertical window (18), such that the light beam is reflected on the inclined surface (17) of the body (5) of the marker.

7. Light signaling marker according to claims 1 to 4, **characterized in that**, in order for the emitted light to be projected directly, projecting a light beam without reflection, the base of the body (5) has a planar configuration, and a progressive recess has been made in its central area, such that said central area is the area of maximum depression, equidistantly centered windows or square holes (25) having been provided therein, through which windows or holes the light beams radiated by the light-emitting diodes (19) are emitted.

8. Light signaling marker according to claim 7, **characterized in that** in order for the diodes (19) to be located opposite the windows or holes (25), the printed circuit board (20) containing said diodes (19) is positioned on the terminals (22), contacting with them, and the other printed circuit board (24) is positioned parallel with respect to the printed circuit board (20), both boards (20) and (24) being in contact with the terminals (22).

## Patentansprüche

1. Lichtsignalisierungswarneinrichtung, ausgebildet aus einem Körper (5), der in einem Verbindungskasten (1) aufgenommen ist, der an den Stellen eingebaut ist, die zu kennzeichnen, zu beleuchten und hervorzuheben sind, und einem Rahmen (2, 2') in den eine transluzente Glasabdeckung (3) eingefügt ist, durch die das Licht abgestrahlt wird und die gefärbt sein kann und von seiner Vorderseite hervorragt, wobei der Rahmen je nach Eignung eine kreisförmige Gestalt (2) oder eine rechteckige Gestalt (2) haben kann, die in beiden Fällen an das Innengehäuse des Verbindungskastens (1) angepasst ist, **dadurch gekennzeichnet, dass** die Abdeckung (3) auswechselbar ist und sich der Körper (5,5') in dem unteren Teil in eine hohle Verlängerung (6, 6') einer kreisförmigen Gestalt mit zwei planen gegenüberliegenden Flächen erstreckt, deren unterer Rand mit einer Rückabdeckung (14) abgeschlossen ist, die eine in Umfangsrichtung verlaufende Schürze hat, die in die Verlängerung (6, 6') bis zu einer äußeren Stufe passt, die in der Schürze ausgebildet ist, wobei die Schürze auf der gegenüberliegenden Seite mit einem elastischen Verschluss (15) geschlossen ist, in dem eine Abfolge von Löchern (16) vorgesehen ist, die sich nach innen in kleinen Erweiterungen erstrecken, durch die elektrische Leiter, die eine gedruckte Schaltkarte (20) versorgen, die die lichtemittierenden Elemente enthält, eng anliegend, dichtungsähnlich eingefügt werden können.

2. Lichtsignalisierungswarneinrichtung nach Anspruch 1, **dadurch gekennzeichnet, dass** auf der Unterseite der Basis des Körpers (5, 5') ein Haltering (21) mit Fallen (23) in der Verlängerung (6, 6') eingefügt ist, wobei sich von diesem Haltering (21) Ansätze (22) erstrecken, die aus Metall mit Streifen wie elektrische Kontakte oder Anschlüsse ausgebildet sind, die mit der gedruckten Schaltkarte (20) in Verbindung stehen, die die Lichtelemente in Gestalt von Dioden (19) enthält, wobei es eine weitere gedruckte Schaltkarte (24) gibt, die mit den Anschlüssen (22) und der gedruckten Schaltkarte (20) in Kontakt steht.

3. Lichtsignalisierungswarneinrichtung nach Anspruch 1 oder 2, **dadurch gekennzeichnet, dass**, wenn der Rahmen kreisförmig (2) ist, der Körper (5) kreisförmig ist und sich in einer hohlen kreisförmigen Verlängerung (6) mit zwei planen gegenüberliegenden Flächen erstreckt, wobei der Rahmen (2) einen kreisförmigen Umriss (2a) hat, in dem Verlängerungen (7) vorgesehen sind, wobei die Verlängerungen (7) eine innere Verjüngung durch Stufen im Inneren des Erwähnten (2) Rahmens erzeugen, wobei auf den Stufen die Basis des Körpers (5) der Warneinrichtung gehalten ist, und die Verlängerungen (7) von einer Schraube (26) gequert werden, deren Kopf sich im Inneren einer kreisförmigen Weitung befindet und die in eine Mutter geschraubt ist, die eine Falle (8) bildet, die die herkömmliche Sicherungseinrichtung zum Sichern derselben an dem Inneren des Verbindungskastens (1) gegen Bewegung bildet.

4. Lichtsignalisierungswarneinrichtung nach Anspruch 1 und 2, **dadurch gekennzeichnet, dass**, wenn der Rahmen rechteckig (2') ist, die Basis (5') des Körpers der Warneinrichtung einen rechteckigen Umriss hat, der eng in die Gestalt dieses Rahmens (2') passt und sich an seiner Unterseite in eine hohle Verlängerung (6') einer zylindrischen Gestalt mit zwei planen gegenüberliegenden Flächen erstreckt, die einen Reif oder Bund (9) bilden, wobei sich von den gegenüberliegenden planen Seiten dieses Reifes oder Bundes nach außen, in dem äußeren Bereich desselben, Fallen (10) erstrecken, die in den Innenteil der Vorsprünge (11) passen, die in dem Zentrum in den Innenflächen des rechteckigen Rahmens (2) vorgesehen sind und in denen schlitzförmige Löcher (12) ausgebildet sind, die angesenkte Innenränder haben, um Schrauben aufzunehmen und zu halten, die in Gewindelöcher geschraubt sind, die zu diesem Zweck in zwei gegenüberliegenden Wänden des Verbindungskastens (1) vorgesehen sind.

5. Lichtsignalisierungswarneinrichtung nach Anspruch 1 bis 4, **dadurch gekennzeichnet, dass**, um das emittierte Licht indirekt zu projizieren, der Körper (5) der Warneinrichtung eine plane obere Basis hat, die eine geringe Neigung (17) auf einer Seite bildet, die in der gegenüberliegenden Seite mit einem vertikalen Fenster (18) endet, durch das der Lichtstrahl emittiert wird, der von der Lichtemittierquelle kommt, die durch die Dioden (19) ausgebildet ist, die auf der elektronischen gedruckten Schaltkarte (20) angeordnet sind.

6. Lichtsignalisierungswarneinrichtung nach Anspruch 5, **dadurch gekennzeichnet, dass** die gedruckte Schaltkarte (24) zwischen den Fallen (23) des Halterings (21) gehalten ist und der Körper des Halterings (21) die Anschlüsse (22) auf einer Seite berührt und senkrecht zu der gedruckten Schaltkarte (20) die Leuchtdioden (19) enthält, die derart angeordnet sind, dass sie mit der Öffnung des vertikalen Fensters (18) übereinstimmen, so dass der Lichtstrahl auf der geneigten Fläche (17) des Körpers (5) der Warneinrichtung reflektiert wird.

7. Lichtsignalisierungswarneinrichtung nach Anspruch 1 bis 4, **dadurch gekennzeichnet, dass**, um das emittierte Licht direkt zu projizieren und einen Lichtstrahl ohne Reflexion zu projizieren, die Basis das Körpers (5) eine plane Gestalt hat und eine zunehmende Ausnehmung in ihrem zentralen Bereich ausgebildet ist, so das der zentrale Bereich der Bereich der größten Vertiefung ist, wobei darin äquidistant zentrierte Fenster oder rechteckige Löcher (25) ausgebildet sind und durch diese Fenster oder Löcher die Lichtstrahlen emittiert werden, die von den Leuchtdioden (19) abgestrahlt werden.

8. Lichtsignalisierungswarneinrichtung nach Anspruch 7, **dadurch gekennzeichnet, dass**, damit sich die Dioden (19) gegenüber der Fenster oder Löcher (25) befinden, die gedruckte Schaltkarte (20), die diese Dioden (19) enthält, auf den Anschlüssen (22) angeordnet ist, die mit diesen in Kontakt stehen, und die andere gedruckte Schaltkarte (24) parallel im Bezug auf die gedruckte Schaltkarte (20) angeordnet ist, wobei beide Karten (20) und (24) mit den Anschlüssen (22) in Kontakt stehen.

## Revendications

1. Marqueur de signalisation de lumière, formé par un corps (5) logé à l'intérieur d'une boîte de jonction (1) qui est intégrée dans des localisations à indiquer, allumé et indiqué, un cadre (2, 2') à l'intérieur duquel est monté un couvercle en verre translucide (3) à travers lequel la lumière rayonne et qui peut être coloré, restant à l'extérieur à sa face frontale, et le cadre peut avoir une configuration circulaire (2) ou une configuration quadrangulaire (2'), selon ce qui est approprié, étant adapté dans les deux cas au boîtier intérieur de la boîte de jonction (1), **caractérisé en ce que** le couvercle (3) est interchangeable, et que le corps (5, 5') s'étend dans la partie inférieure dans un prolongement creux (6, 6') d'une configuration circulaire, avec deux faces planes opposées, dont le bord inférieur est fini avec un couvercle arrière (14) qui présente une pièce de fixation de collerette périmétrique, à l'intérieur dudit prolongement (6, 6'), jusqu'à un gradin extérieur réalisé dans ladite collerette, ladite collerette étant fermée, sur le côté opposé, par une fermeture élastique (15) dans laquelle est ménagée une série de trous (16) s'étendant vers l'intérieur selon de petites extensions, à travers lesquels les conducteurs électriques alimentant une carte de circuit imprimé (20) contenant les éléments émetteurs de lumière peuvent être introduits d'une manière bien ajustée comme un joint.

2. Marqueur de signalisation de lumière selon la revendication 1, **caractérisé en ce que** sur la face inférieure de la base du corps (5, 5'), une bague de support (21) avec des cliquets (23) est insérée dans le prolongement (6, 6'), à partir de la bague de support (21) émergent des annexes (22) réalisés en métal avec des pattes comme des contacts ou bornes électriques, qui sont en contact avec la carte de circuit imprimé (20) contenant les éléments de lumière formés par des diodes (19), il y ayant une autre carte de circuit imprimé (24) qui est en contact avec lesdites bornes (22) et avec ladite carte de circuit imprimé (20).

3. Marqueur de signalisation de lumière selon les revendications 1 et 2, **caractérisé en ce que**, lorsque le cadre est circulaire (2), le corps (5) est circulaire et s'étend dans un prolongement circulaire creux (6), avec deux faces planes opposées, et ledit cadre (2) a un contour circulaire (2a) dans lequel des prolongements (7) sont réalisés, lesdits prolongements (7) créent un retrécissement intérieur par des gradins à l'intérieur du cadre mentionné (2), sur les gradins, la base du corps (5) du marqueur est supportée, lesdits prolongements (7) étant traversés par une vis (26) dont la tête est logée à l'intérieur d'un évasement circulaire et est vissée dans un écrou, qui amène un cliquet (8) formant le moyen de fixation classique pour sa fixation à rentrer dans l'intérieur de la boîte de jonction (1).

4. Marqueur de signalisation de lumière selon la revendication 1 et 2, **caractérisé en ce que**, lorsque le cadre est quadrangulaire (2'), la base (5') du corps du marqueur a un contour quadrangulaire s'adaptant étroitement à l'intérieur de la configuration de ce cadre (2') et s'étend vers le bas, à sa face inférieure, dans un prolongement creux (6') d'une configuration cylindrique, avec deux faces planes opposées contemplant un collier ou bande (9), à partir de parties planes opposées dudit collier ou bande émergent vers l'extérieur, dans sa zone extérieure, des cliquets (10) s'adaptant dans la partie intérieure des saillies (11) réalisées dans le centre des faces intérieures du cadre carré (2), dans lequel des trous fendus (12) ont été réalisés, en étant aptes à avoir des bords intérieurs contre-dépouillés pour loger et retenir des vis (13) qui sont vissées dans des trous taraudés réalisés dans un tel but à l'intérieur de deux parois opposées de la boîte de jonction (1).

5. Marqueur de signalisation de lumière selon les revendications 1 à 4, **caractérisé en ce que**, pour que la lumière émise soit projetée indirectement, le corps (5) du marqueur possède une base supérieure plane formant une petite inclinaison (17) sur un côté finie dans le côté opposé par une fenêtre verticale (18) à travers laquelle le faisceau de lumière provenant de la source d'émission de lumière est émis, formé par les diodes (19) agencées dans la carte de circuit imprimé électronique (20).

6. Marqueur de signalisation de lumière selon la revendication 5, **caractérisé en ce que** la carte de circuit imprimé (24) est retenue entre les cliquets (23) de la bague de support (21) et le corps de ladite bague de support (21), en venant en contact avec les bornes (22) sur un côté et, perpendiculairement à la carte de circuit imprimé (20), contenant les diodes émettrices de lumière (19) qui sont agencées de telle sorte qu'elles coïncident avec l'ouverture de la fenêtre verticale (18) de sorte que le faisceau de lumière est réfléchi sur la surface inclinée (17) du corps (5) du marqueur.

7. Marqueur de signalisation de lumière selon les revendications 1 à 4, **caractérisé en ce que**, pour que la lumière émise puisse être projetée directement, projeter un faisceau de lumière sans réflexion, la base du corps (5) a une configuration plane, et un évidement progressif a été réalisé dans sa zone centrale de sorte que ladite zone centrale est la zone du plus grand creux, des fenêtres centrées équidistantes ou des trous carrés (25) ayant été réalisés dans celle-ci, à travers lesdites fenêtres ou trous, les faisceaux de lumière émis par les diodes émettrices de lumière (19) sont émis.

8. Marqueur de signalisation de lumière selon la revendication 7, **caractérisé en ce que**, pour que les diodes (19) soient situées en face des fenêtres ou des trous (25), la carte de circuit imprimé (20) contenant une desdites diodes (19) est positionnée sur les bornes (22), en venant en contact avec celles-ci, et l'autre carte de circuit imprimé (24) est positionnée parallèlement relativement à la carte de circuit imprimé (20), les deux cartes (20) et (24) étant en contact avec les bornes (22).
